# EUROPEAN PATENT SPECIFICATION

(11) **EP 3 237 840 B1**
(45) Date of publication and mention of the grant of the patent: **20.05.2020**
(21) Application number: 15873819.5
(22) Date of filing: 24.12.2015
(51) Int. Cl.: G01C 5/00, G01C 15/00

(54) **METHOD FOR THE POSITIONING OF A ROTATING LASER BEAM USING A LASER RECEIVER**
VERFAHREN ZUR POSITIONIERUNG EINES ROTIERENDEN LASERSTRAHLS UNTER VERWENDUNG EINES LASEREMPFÄNGERS
PROCÉDÉ POUR LE POSITIONNEMENT D'UN FAISCEAU LASER TOURNANT À L'AIDE D'UN RÉCEPTEUR LASER

(30) Priority: 24.12.2014 US 201462096637 P
(43) Date of publication of application: 01.11.2017
(73) Proprietor: Robert Bosch GmbH, 70442 Stuttgart (DE)
(72) Inventor: OLETY, Vijayendra R., 560010 Bangalore (IN); DAVENPORT, John R., Sheldon 60966, Illinois (US); WILKS, Anthony, St Edmunds, Suffolk IP33 3XA (US); JACKISH, Sebastian, 71636 Ludwigsburg (DE); DAMMERTZ, Ralph, 70839 Gerlingen (DE)
(86) International application number: PCT/US2015/000416
(87) International publication number: WO 2016/105550

(56) References cited:
- EP-A2- 0 606 849
- EP-A2- 1 203 930
- EP-A2- 2 400 263
- DE-U1- 20 200 218
- NL-C- 1 039 289
- US-A- 4 029 415
- US-A- 4 718 171
- US-A- 4 786 164
- US-A- 5 446 968
- US-A1- 2006 103 927
- US-A1- 2014 202 011
- US-B1- 6 314 650

## Description

### CROSS-REFERENCE TO RELATED APPLICATIONS

This application claims priority to U.S. Provisional Application Serial No. 62/096,637 entitled "METHOD FOR THE POSITIONING OF A ROTATING LASER BEAM USING A LASER RECEIVER " by Olety et al., filed December 24, 2014.

### TECHNICAL FIELD

The present disclosure relates generally to laser levels and in particular to rotary laser levels.

### BACKGROUND

Rotary laser levels are measurement and layout tools that are configured to project a laser beam in a complete 360°circle. Po sitioning a rotary laser level in the center of a room or work area enables a level laser line to be projected around the entire room or work area. This enables all types of work to be performed including site grading, laying out foundations for building construction, installing drop-ceilings, pouring concrete, installing chair rails, installing fences, and more. Rotary laser levels are either of the manual or automatic leveling type. Manual leveling requires that the operator manually adjust the level of the laser beam to achieve level positioning. In rotary laser levels with automatic leveling, the laser assembly is typically mounted on a pendulum arrangement and is configured to use gravity and/or a leveling mechanism, such as a servo-motor, to achieve level positioning.

Some rotary laser levels are configured to work with a remote unit. The remote unit is capable of controlling the operation of the laser level remotely so that a single person can operate the laser level. The remote unit may also include a laser detector or receiver. This facilitates the detection of the laser beam outdoors, and also allows other information to be determined, such as horizontal and vertical reference positions, and distance measurements.

An example of a rotary laser level that is configured to work with a remote unit is disclosed in US 6314650 B1. Specifically, the disclosed laser level is configured to adjust a laser beam in response to electrical signals transmitted from the remote unit, which is a laser receiver.

### DRAWINGS

FIG. 1 is a perspective view of an embodiment of a rotary laser level including a base unit and a laser receiver.
FIG. 2 is a perspective view of the rotary laser level of FIG. 1 showing the laser receiver being removed from the base unit.
FIG. 3 is a perspective view of the rotary laser level of FIG. 1 showing the base unit in greater detail.
FIG. 4 is a schematic block diagram of the base unit of the rotary laser level of FIG. 1.
FIG. 5 is an illustration of an embodiment of the laser receiver of the rotary laser level of FIG. 1.
FIG. 6 is a schematic block diagram of the laser receiver of the rotary laser level of FIG. 1.
FIG. 7 is a schematic depiction of a laser beam centering process.
FIG. 8 is a flowchart of an embodiment of a process for positioning a laser beam from the rotary laser level on the laser receiver.
FIG. 9 is a flowchart of another embodiment of a process for positioning a laser beam from the rotary laser level on the laser receiver.

### DESCRIPTION

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles of the disclosure as would normally occur to a person of ordinary skill in the art to which this disclosure pertains.

The invention concerns a method of operating a rotary laser level comprises activating a rotary laser controller to rotate a laser beam at a predetermined rotation rate and to traverse the laser beam incrementally and vertically across a laser receiving surface of a receiver unit in a first direction at a predetermined displacement rate. A laser detection system of the receiver unit detects whether the laser beam is within a predetermined range about a center line position defined on the laser receiving surface using a laser detection system of the receiver unit. When the detected vertical position of the laser beam is within the predetermined range, a stop command is transmitted to the rotary laser controller from the laser receiver. The rotary laser controller is configured to stop the incremental traversal of the laser beam in response to the stop command.

When the vertical position of the laser beam has been detected within the predetermined range about the center line position, the rotary laser controller may be activated to determine a slope of the laser beam. The rotary laser controller can then transmit the slope from the rotary laser controller to the laser receiver. The slope may then be displayed on a display screen of the laser receiver.

According to the invention, the laser beam is displaced in the first direction until the laser beam is moved to within the predetermine range or until the laser beam is moved past center line position to a position outside of the predetermined range. When the laser beam is moved past center line position to a position outside of the predetermined range, a control system of the receiver unit instructs the rotary laser controller to displace the laser beam in a second direction that is opposite the first direction. In addition, the predetermined range is increased by a predetermined amount if the laser beam is moved past the center line position to a position outside of the predetermined range. For example, the predetermined range may be initially set to +/-1mm. The range may be increased, for example, to +/- 2mm if the laser beam is moved past the center line position to a position outside of the predetermined range.

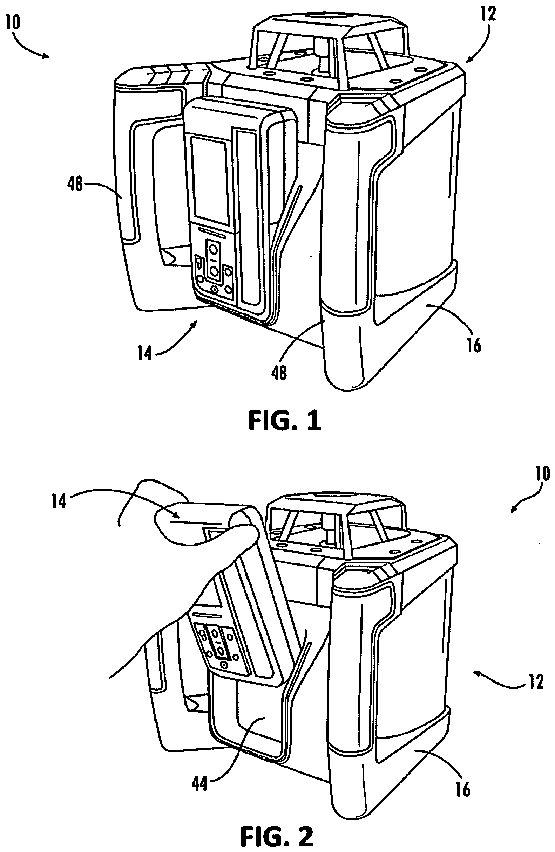

Referring to FIGS. 1-3, the rotary laser level system 10 includes a base unit 12 and a receiver unit 14. The base unit 12 comprises a housing 16 formed of a suitable hard, durable material, such as molded plastic. The housing 16 has a generally cubic shape although any suitable shape may be used. The bottom portion of the housing 16 is configured to be placed against a surface, such as a floor or ground. The bottom portion may include mounting features (not shown) that enable the base unit 12 to be mounted to a tripod (not shown), or to a wall bracket (not shown), or other type of support structure. When the housing 16 is positioned with the bottom portion facing downwardly, the base unit 12 is in a horizontal position (defined by the orientation of the laser assembly). The housing 16 may also be configured for operation in a vertical position by positioning the housing 16 with one of the sides facing downwardly. For example, in one embodiment, the rear portion of the housing may be configured to be placed on the floor or on the ground so the base unit 12 can be operated in a vertical position.

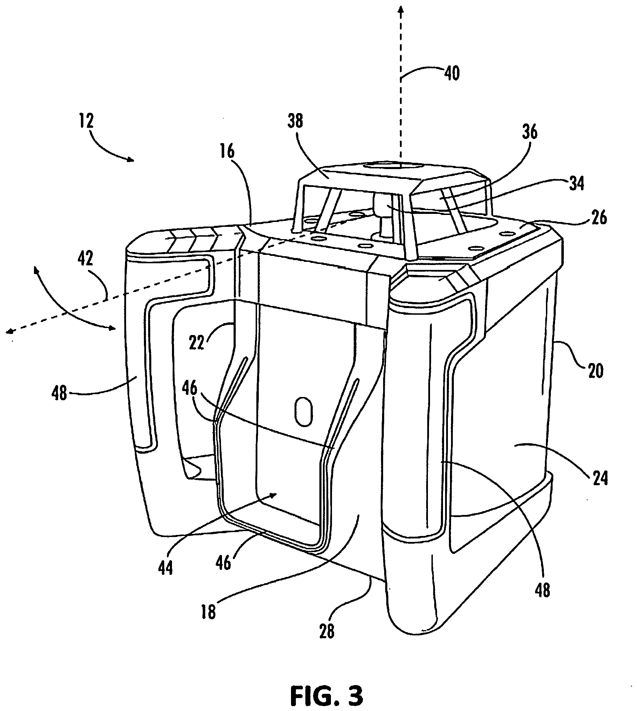

Referring to FIG. 3, the top portion 26 of the housing 16 defines an opening through which the rotating head portion 34 of a laser assembly extends. A transparent cap 36 is positioned over the head portion 34, and a protective cage 38 is mounted to the top portion over the cap 36. Transparent windows are provided in the cap 36 to enable the laser beams 40, 42 from the laser assembly to emanate out of the housing 12. The protective cage 38 may be removably attached to the housing 12 to provide access to the head portion 34 of the rotary laser so the laser beam can be manipulated by an operator, e.g., to manually position the laser beam on a known point or work area.

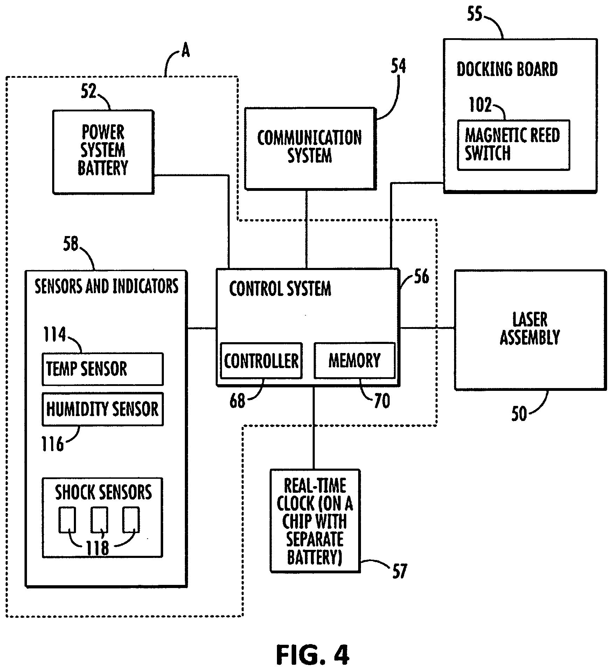

Referring to the block diagram of FIG. 4, the internal components of the base unit 12 include a rotary laser assembly 50, a power system 52, a communication system 54, a control system 56, and various sensors and indicators 58 (explained in more detail below). In one embodiment, the control system 56, power system, and sensors 58 are implemented on the same printed circuit board PCB A. The rotary laser assembly 50 is operably mounted within the housing 12 and includes a self-leveling support (not shown) and a laser module (not shown). In one embodiment, the self-leveling support structure comprises a pendulum arrangement that is movably mounted within the housing. The pendulum arrangement is configured to automatically assume a predetermined orientation based on the inclination of the housing to provide a reference position for the control system. For example, the pendulum arrangement may be configured to use gravity and/or to use a leveling device, such as a servo-motor, to automatically level the pendulum arrangement relative to the orientation of the housing. Self-leveling occurs automatically each time the housing is repositioned so long as the housing is stably supported and not inclined more than a predefined amount, e.g., 8%, relative to horizontal.

The laser module is incorporated into the rotating head portion 34 that is rotatably mounted to the support structure. The laser module is configured to generate a plumb laser beam 40 and a rotary laser beam 42. The plumb laser beam 40 is emitted by the laser module vertically through the top of the protective cage 38 as depicted in FIG. 3. The rotary laser beam 42 is emitted by the laser module horizontally, e.g., at 90°relative to the plumb be am 40. The laser beams 40, 42 may be generated by the laser module in any suitable manner. For example, the laser module may include one or more laser generators, such as a laser diode or an array of laser diodes. The laser module may include any of a variety of laser control structures, such as lens, beam splitters, reflectors, collimators, and the like, so that the laser beams are generated with desired properties.

The head portion 34 is configured to rotate with respect to the support structure about a vertical axis. A drive system (not shown), such as a motor, is attached to the head portion 34 that is configured to cause the head assembly to rotate at one or more predetermined rotational speeds about the vertical axis. The drive system is also configured to cause the head portion and the laser module to rotate to a desired angular position with respect to the axis and to oscillate within a desired angular range about the axis. The drive system may be configured to allow manual positioning of the laser assembly which allows the rotary laser beam to be pointed to a particular point or work surface by the operator. In one embodiment, the laser assembly includes a locking mechanism that is configured to hold the laser assembly in place when the base unit is turned off or put in a standby mode.

Referring to FIG. 4, the power system 52 for the base unit 12 is configured to run on battery power 60. Batteries for the base unit 12 may have a nominal voltage, e.g., between 4 V and 50 V and may include cells having a chemistry of, for example, NiCd, NiMH, Li-ion, etc. A battery tray or battery access panel (not shown) is provided in one of the surfaces of the housing 12 to enable batteries to be installed and removed from the base unit 12. In one embodiment, the base unit 12 is configured to utilize 12V batteries. The base unit 12 may include electrical connections 62 for connecting the base unit 12 to an external power sources, such as an AC outlet, via a power cord.

The control system 56 includes a controller 68 and electronic storage, or memory 70. The controller 68 comprises a processing device, such as a central processing unit (CPU), an application specific integrated circuit (ASIC), a field programmable gate array (FPGA) device, or a microcontroller. The controller 68 is configured to execute programmed instructions that are stored in the electronic storage 70 for controlling and operating the laser assembly. A real-time clock 57 for the control system 56 is implemented on a chip and has a separate battery, such as a Li-ion battery.

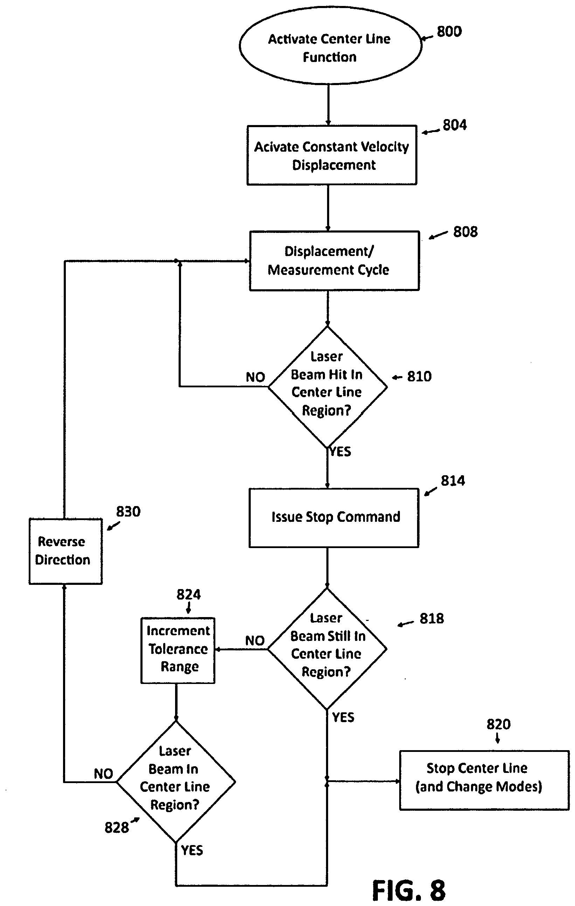

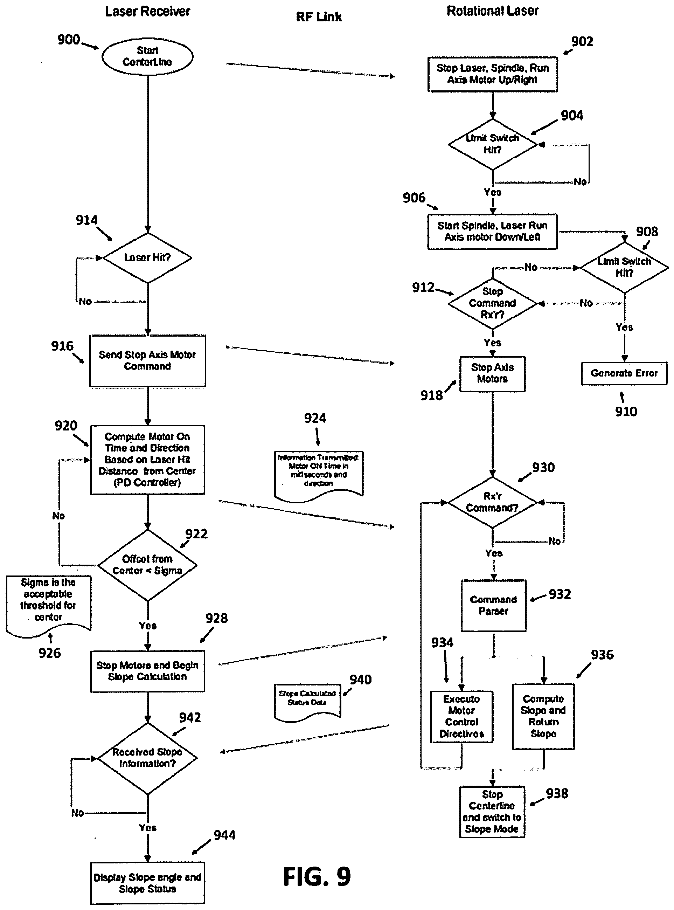

The controller 68 is configured to communicate with the receiver unit 14 via the communication system 54. In one embodiment, the communication system 54 comprises a radio frequency (RF) remote control system having a RF transceiver for transmitting and receiving RF signals. The control system 56 is configured to receive control signals from the receiver unit 14 via the communication system 54 and to execute commands indicated by the control signals. The control signals from the receiver 14 may be used to control the operating mode, aperture angle (for line mode), point angle (for point mode), power (ON/OFF), rotation speed, and the like of the laser assembly. The operating modes include, for example, a rotation mode (FIG. 8), a line mode (FIG. 9), and a point mode (FIG. 10). In rotation mode, the rotary laser beam is moved at a constant rotation speed around the axis of rotation and generates a continuous laser marking on a target surface. In line mode, the rotary laser beam is oscillated back and forth within a limited aperture angle to generate a line-shaped laser mark on a target surface. In point mode, the rotary laser beam is held stationary at a predetermined angular position to generate a point-shaped laser mark on a target surface. The control system 56 may also be configured to transmit battery status information and leveling status information to the receiver unit 14 periodically or in response to requests received from the receiver unit 14.

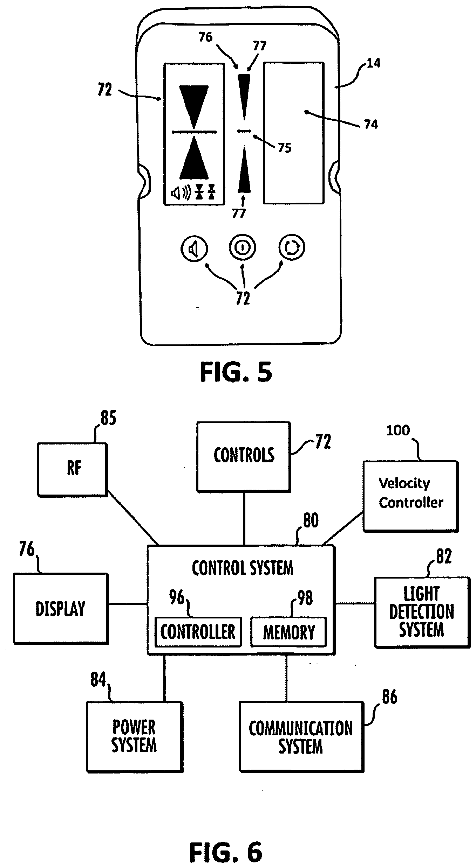

Referring to FIG. 5, the receiver unit 14 for the rotary laser level comprises a small, portable housing that is configured to be received and retained in the docking position 44 (FIG. 1) of the base unit 12. The receiver unit includes control elements 72 for controlling the power, volume, and functionality of the receiver unit. The receiver unit also includes a laser reception area 74 that corresponds to the location where the laser sensors of the laser detection system are located.

A schematic block diagram of the receiver unit 14 is depicted in FIG 6. The receiver unit 14 includes a control system 80, a rotational laser detection system 82, a power system 84, an radio frequency (RF) transceiver 85 and a communication system 86 that are supported by the housing 16. The power system 84 may be configured to use batteries (not shown). Any suitable type and size of batteries may be used.

The control system 80 for the receiver unit 14 includes a controller 96 and electronic storage 98. The controller 96 comprises a processing device, such as a central processing unit (CPU), an application specific integrated circuit (ASIC), a field programmable gate array (FPGA) device, or a microcontroller. The controller 96 is configured to execute programmed instructions that are stored in the electronic storage 98 for controlling and the receiver unit 14 and the base unit 12. The controller 96 is configured to send and receive control signals to the base unit 12 via the communication system 86. In one embodiment, the communication system 86 comprises a remote control system configured to generate control signals for the base unit that are transmitted via the RF transceiver 85.

The rotation laser detection system 82 includes light sensors (not shown) that are configured to receive and detect the laser beams 40, 42 emitted by the base unit 12. The light sensors may comprise any suitable type of light sensor, such as charge coupled devices (CCDs), photodiodes, and the like, that are capable of detecting the laser beams emitted by the laser assembly of the base unit 12. The audio indicator 83 may be activated in response to the detection of the laser beams. The control system 80 may also be configured to determine information in response to detecting a laser beam, such as beam centers, horizontal reference positions, vertical reference positions, and distances from the base unit 12.

The control system 80 is operably coupled to receive input from the control elements 72 on the housing. The control elements 72 may comprise pushbuttons, knobs, slides, and other types of switches that are configured to allow an operator to control the base unit 12 including the selection of the operating parameters of the laser assembly. For example, the control elements 72 may include control elements for controlling power to the receiver unit 14 and base unit 12 and for selecting the operating mode, scan angle, and rotation speed of the laser assembly.

The control system 80 is configured to cause the display 76 to display status indicators, measurements, and other data regarding the operation of the rotary laser level assembly. The display 76 may LED indicators for indicating the position of the laser beam with respect to the laser reception area. In other embodiments, other displays may be used including LCD displays which can be used to show status indicators, measurements, and other data.

Referring to FIG. 5, a central portion of the laser reception area 74 is defined as the center line region/band. The laser detection system 82 is configured to detect when a laser beam is directed onto or impinges on the center line region of the reception area. The laser receiver 14 includes LED indicators 76 for indicating the position of the laser beam with respect to the reception area 74. In the embodiment of FIG. 5, the indicators 76 include a center line indicator 75 for indicating the center line and arrow indicators 77 for indicating whether the laser beam is hitting the reception area above or below the center line. In other embodiments, any suitable mechanism or method of indicating the center line on the laser receiver 14 may be used. In addition to visual indicators, the control system may be configured to activate a speaker system to emit sounds, such as beeps and/or buzzes, for indicating positions of the laser beam.

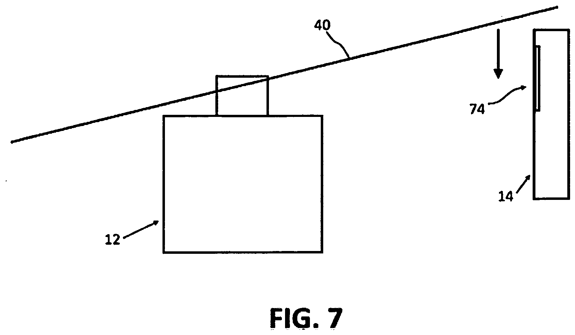

In accordance with the disclosure, the control systems for the rotary laser level include an automated center line positioning functionality that enables the laser beam to be positioned on the center line of the receiver automatically. As part of the center line positioning process, the laser positioning system of the base unit is driven to traverse the laser beam across the laser receiver 14 in a vertical direction, e.g., from top to bottom or from bottom to top, as depicted in FIG. 7. The laser detection system 82 of the laser receiver detects when the laser beam impinges on or hits a predefined center line region of the reception area 74. When the laser beam is detected at the center line, the control system of the laser receiver transmits a stop command to the base unit for stopping the movement of the laser positioning system.

To enable the rotary laser assembly to be controlled so that the laser beam can be automatically and accurately directed onto the center line region of the laser receiver, the laser receiver 14 includes a constant velocity controller 100 that is configured to generate velocity control signals for controlling the vertical displacement of the laser beam relative to the laser receiver 14. The velocity control signals cause the rotary laser assembly to move so that the laser beam is displaced across the laser sensing surface at a constant velocity or rate. In one embodiment, the velocity controller is configured to generate pulse-width modulated (PWM) values which are used to set the pulse-width, or ON time, of the PWM signal to the motor of the laser positioning system.

In one embodiment, the laser assembly is moved so that the laser beam is displaced incrementally at a predefined distance per control cycle. The target displacement rate depends on various factors, such as the specifications of the components, the desired level of accuracy, and the operating environment. To limit the effects of noise, the displacement rate is selected to enable multiple measurements to be performed during each cycle which are averaged to arrive at a current position for the laser beam for the cycle. For example, in one embodiment, the control cycle is set so that 15 position measurements are performed during each cycle which are averaged to arrive at the current position.

The displacement rate depends on the amount of time that it takes for the desired number of measurements to be performed. When activated in rotation mode, the amount of time required to perform the desired number of measurements depends on the rotations per minute specified for the laser beam. As an example, at a specification of 600 rpm, the laser beam will impinge on the laser sensing surface at 10 hits per second. In this scenario, if 15 measurements are used to arrive at the current position, the control cycle is set to 1.5 seconds to allow enough time for 15 laser hits to be measured.

Once the current position of the laser beam has been determined, a displacement signal is transmitted to the base unit that causes the laser beam to be displaced to a subsequent position. The displacement is defined as the difference between the current position and the previous position. The distance that the laser beam is displaced after each cycle is set to an initial value that depends in part on the accuracy of the laser detection system the desired level of accuracy for positioning the center line. In one embodiment, the displacement distance per cycle is set to 1.5mm so that the displacement rate is 1.5mm/1.5 seconds.

As noted above, the laser beam is traversed across the laser sensing surface until the laser beam reaches the center line. A predetermined position on the sensor array is defined as the center line for the laser receiver. A tolerance range/band is defined about the predefined center line position within which the laser beam will be considered as a center line hit. The tolerance range/band is set initially to a smaller value or a minimal tolerance value, e.g., +/-1mm. If the laser beam overshoots the center line region/band during a first pass, which may happen when the laser receiver and base unit are positioned at greater distances and when the operating environment is noisy, then the tolerance range/band is incrementally increased, e.g., to a value of +/- 2mm, for the subsequent passes until the laser beam can be stopped in the center line region of the laser receiver.

Referring to FIG. 8, an embodiment of a process for positioning the laser beam on the laser reception area of a laser receiver is depicted. According to FIG. 8, the center line function is activated (block 800). The laser receiver then activates the constant velocity controller to traverse the laser beam across the laser receiving surface at a predetermined displacement rate, which in one embodiment is 1.5 mm/control cycle (block 804). A displacement cycle is then executed in which the laser beam is displaced and the current position is measured (block 808). The direction of displacement, e.g., upwardly or downwardly, at this point depends on where the laser beam initially strikes the receiver. The velocity controller causes the laser beam to be moved in the same direction towards the other end of the laser sensing surface until the laser beam is detected in the initial tolerance band, e.g., +/-1mm, about the center line (block 810) at which point the laser receiver sends a stop command to the base unit (block 814). If the laser beam remains within the tolerance band (block 818) about the center line after the laser beam has stopped, then a center line positioning of the laser beam is confirmed and further operations may then be performed (block 820).

Otherwise, if the laser beam overshoots the center line band after the stop command has been issued, then the tolerance range for the center line is increased to the next level, e.g., +/-2mm (block 824). If the laser beam is located within the center line band after increasing the tolerance range for the center line to the next level (block 828), then a center line positioning of the laser beam may then be confirmed and further operations may be performed (block 820). In one embodiment, after a predetermined timeout period, e.g., 3.0 seconds, the base unit may request confirmation from the laser receiver that the laser beam is within the center line band. If the laser receiver confirms that the laser beam is within the center line band, then the base unit will switch to a slope mode during which the base unit computes the slope of the laser beam and transmits the slope to the laser receiver where it is displayed on the display screen.

If the laser beam is not within the center line band after the tolerance range has been increased, then the direction of displacement is reversed (block 830) and control returns to block 808) at which point displacement in the reverse direction begins. The process may go through a predetermined number of iterations until the laser beam is stopped within the center line region of the laser receiver. If after the predetermined number of iterations, the laser beam has not been stopped within an acceptable range of the center line of the laser receiver, then an alert can be generated indicating a problem with the system.

FIG. 9 depicts another embodiment of a process for positioning a laser beam on a laser receiver that shows process flow for both the laser receiver and the base unit. In FIG. 9, the laser receiver activates the center line function by transmitting a control signal to the base unit (block 900). The axis motor of the laser assembly is activated to move the laser beam to an upper limit position (block 904). The axis motor of the laser assembly then starts traversing the laser beam downwardly (block 906). The laser detection system is monitored on the laser receiver to detect when the laser beam hits the laser receiver (block 914). When a laser hit is detected, a stop axis motor command is transmitted to the base unit (block 916).

The axis motor of the laser assembly continues to displace the laser beam downwardly until the lower limit switch is reached (block 908) or stop command is received from the laser receiver (block 912). If the limit switch is reached before the stop command is received, then an error is generated (block 910). If the stop command is received before the lower limit is reached, then the axis motor is stopped (block 918). The current position of the laser beam is determined at the laser receiver (block 920) and a determination is made whether the distance from the center line position is within tolerance (e.g., offset from center < Sigma) (block 922). Sigma is defined as the acceptable tolerance threshold from the center (block 926). If the distance from the center line is not within tolerance, then a motor command signal is computed that includes ON time and direction information for the axis motor and is transmitted to the base unit. If the distance of the laser beam hit from the center line is within the threshold (Sigma), then the laser receiver transmits a stop command and activates slope mode (block 928).

The base unit parses received command signals (block 932). If the command is a motor command signal, the axis motor is activated based on the ON time and direction specified in the command (block 934) and control returns to block 930 to await further commands. If the command is a stop command and slope mode activation command, the base unit computes the slope and transmits the slope back to the laser receiver. The base unit then stops the centerline function and switches to slope mode (block 938). The laser receiver waits to receive the slope information from the base unit (block 942). When the slope information is received, the slope angle and status may be displayed on the laser receiver (block 944).

While the disclosure has been illustrated and described in detail in the drawings and foregoing description, the same should be considered as illustrative and not restrictive in character. It is understood that only the preferred embodiments have been presented.

## Claims

1. A method of operating a rotary laser level system (10) including a base unit (12) and a receiver unit (14), the base unit (12) including a rotary laser assembly, the receiver unit (14) including a laser receiving surface, the laser receiving surface defining a center line position, the method comprising:
activating a rotary laser controller to rotate a laser beam (42) at a predetermined rotation rate and to traverse the laser beam (42) incrementally and vertically across the laser receiving surface in a first direction at a predetermined displacement rate;
detecting whether the laser beam (42) is within a predetermined range about a center line position defined on the laser receiving surface using a laser detection system (82) of the receiver unit (14); and
when the detected vertical position of the laser beam (42) is within the predetermined range, transmitting a stop command to the rotary laser controller from the receiver unit (14), the rotary laser controller being configured to stop the incremental traversal of the laser beam (42) in response to the stop command and wherein, if the laser beam (42) overshoots the center line position and moves to a position outside of the predetermined range, a control system of the receiver unit (14) instructs the rotary laser controller to displace the laser beam (42) in a second direction that is opposite the first direction;
the method being **characterized in that** it further comprises:
if the laser beam overshoots the center line position and moves to a position outside of the predetermined range, the control system of the receiver unit increases the predetermined range by a predetermined amount.

2. The method of claim 1, further comprising:
when the vertical position of the laser beam (42) has been detected within the predetermined range about the center line position, causing the rotary laser controller to determine a slope of the laser beam;
transmitting the slope from the rotary laser controller to the receiver unit (14); and displaying the slope on a display screen of the receiver unit (14).

3. The method of claim 1, wherein the predetermined range is initially +/- 1mm.

4. The method of claim 1, wherein the predetermined range is increased to +/- 2mm if the laser beam is moved past the center line position to a position outside of the predetermined range.

## Patentansprüche

1. Verfahren zum Betreiben eines Rotationslaser-Nivelliersystems (10), das eine Basiseinheit (12) und eine Empfängereinheit (14) beinhaltet, wobei die Basiseinheit (12) eine Rotationslaserbaugruppe beinhaltet, die Empfängereinheit (14) eine Laserempfangsoberfläche aufweist, wobei die Laserempfangsoberfläche eine Mittellinienposition definiert, wobei das Verfahren Folgendes umfasst:
Aktivieren eines Rotationslasercontrollers zum Rotieren eines Laserstrahls (42) mit einer vorbestimmten Rotationsrate und zum inkrementellen und vertikalen Querenlassen des Laserstrahls (42) über die Laserempfangsoberfläche mit einer vorbestimmten Vorschubrate in einer ersten Richtung;
Detektieren, ob sich der Laserstrahl (42) innerhalb einer vorbestimmten Entfernung um eine auf der Laserempfangsoberfläche definierte Mittellinienposition befindet, unter Verwendung eines Laserdetektionssystems (82) der Empfängereinheit (14); und
wenn die detektierte Vertikalposition des Laserstrahls (42) innerhalb der vorbestimmten Entfernung liegt, Senden eines Stoppbefehls von der Empfängereinheit (14) an den Rotationslasercontroller, wobei der Rotationslasercontroller ausgelegt ist zum Stoppen der inkrementellen Querung des Laserstrahls (42) als Reaktion auf den Stoppbefehl, und
wobei, wenn der Laserstrahl (42) über die Mittellinienposition hinausschießt und sich zu einer Position außerhalb der vorbestimmten Entfernung bewegt, ein Steuerungssystem der Empfängereinheit (14) den Rotationslasercontroller instruiert, den Laserstrahl (42) in einer zweiten Richtung zu verschieben, die der ersten Richtung entgegengerichtet ist;
wobei das Verfahren **dadurch gekennzeichnet ist, dass** es ferner Folgendes umfasst:
wenn der Laserstrahl über die Mittellinienposition hinausschießt und sich zu einer Position außerhalb der vorbestimmten Entfernung bewegt, vergrößert das Steuerungssystem der Empfängereinheit die vorbestimmte Entfernung um einen vorbestimmten Betrag.

2. Verfahren nach Anspruch 1, das ferner Folgendes umfasst:
wenn die Vertikalposition des Laserstrahls (42) innerhalb der vorbestimmten Entfernung um die Mittellinienposition herum detektiert wurde, Veranlassen, dass der Rotationslasercontroller eine Steigung des Laserstrahls bestimmt;
Senden der Steigung von dem Rotationslasercontroller an die Empfängereinheit (14); und
Anzeigen der Steigung auf einem Anzeigebildschirm der Empfängereinheit (14).

3. Verfahren nach Anspruch 1, wobei die vorbestimmte Entfernung anfangs +/-1 mm beträgt.

4. Verfahren nach Anspruch 1, wobei die vorbestimmte Entfernung auf +/-2 mm erhöht wird, wenn sich der Laserstrahl über die Mittellinienposition hinaus zu einer Position außerhalb der vorbestimmten Entfernung bewegt.

## Revendications

1. Procédé de fonctionnement d'un système de niveau laser rotatif (10) comportant une unité de base (12) et une unité réceptrice (14), l'unité de base (12) comportant un ensemble laser rotatif, l'unité réceptrice (14) comportant une surface de réception de laser, la surface de réception de laser définissant une position de ligne centrale, le procédé comprenant les opérations suivantes :
activer un contrôleur de laser rotatif pour faire tourner un faisceau laser (42) à une vitesse de rotation prédéterminée et pour faire parcourir au faisceau laser (42) de façon incrémentale et verticale la surface de réception de laser dans une première direction à une vitesse de déplacement prédéterminée ;
détecter si le faisceau laser (42) est à l'intérieur d'une plage prédéterminée autour d'une position de ligne centrale définie sur la surface de réception de laser en utilisant un système de détection de laser (82) de l'unité réceptrice (14) ; et
quand la position verticale détectée du faisceau laser (42) est à l'intérieur de la plage prédéterminée, transmettre une commande d'arrêt au contrôleur de laser rotatif depuis l'unité réceptrice (14), le contrôleur de laser rotatif étant configuré pour arrêter le parcours incrémental du faisceau laser (42) en réponse à la commande d'arrêt et dans lequel, si le faisceau laser (42) dépasse la position de ligne centrale et se déplace jusqu'à une position à l'extérieur de la plage prédéterminée, un système de contrôle de l'unité réceptrice (14) donne l'instruction au contrôleur de laser rotatif de déplacer le faisceau laser (42) dans une deuxième direction qui est opposée à la première direction ;
le procédé étant **caractérisé en ce qu'**il comprend en outre l'opération suivante :
si le faisceau laser dépasse la position de ligne centrale et se déplace jusqu'à une position à l'extérieur de la plage prédéterminée, le système de contrôle de l'unité réceptrice augmente la plage prédéterminée d'une quantité prédéterminée.

2. Procédé de la revendication 1, comprenant en outre les opérations suivantes :
quand la position verticale du faisceau laser (42) a été détectée à l'intérieur de la plage prédéterminée autour de la position de ligne centrale, conduire le contrôleur de laser rotatif à déterminer une pente du faisceau laser ;
transmettre la pente depuis le contrôleur de laser rotatif à l'unité réceptrice (14) ; et
afficher la pente sur un écran d'affichage de l'unité réceptrice (14).

3. Procédé de la revendication 1, dans lequel la plage prédéterminée est initialement de ± 1 mm.

4. Procédé de la revendication 1, dans lequel la plage prédéterminée est augmentée de ± 2 mm si le faisceau laser est déplacé au-delà de la position de ligne centrale jusqu'à une position à l'extérieur de la plage prédéterminée.
